# EUROPEAN PATENT SPECIFICATION

(11) **EP 3 765 711 B1**
(45) Date of publication and mention of the grant of the patent: **16.03.2022**
(21) Application number: 19721666.6
(22) Date of filing: 15.03.2019
(51) Int. Cl.: F01C 1/22, F02B 53/00, F02B 53/02, F02B 47/02

(54) **AN ASYMMETRIC ROTARY ENGINE WITH A 6-PHASE THERMODYNAMIC CYCLE**
ASYMMETRISCHER KREISKOLBENMOTOR MIT EINEM 6-PHASIGEN THERMODYNAMISCHEN ZYKLUS
MOTEUR ROTATIF ASYMÉTRIQUE À CYCLE THERMODYNAMIQUE À 6 PHASES

(30) Priority: 15.03.2018 GB 201804184
(43) Date of publication of application: 20.01.2021
(73) Proprietor: R6 Eco-Engine Ltd, Manchester M15 5TJ (GB)
(72) Inventor: LIBRALATO, Rugerro, Manchester M15 5TJ (GB); WAI LEUNG, Shun, Manchester M15 5TJ (GB); ARIS, Dan, Manchester M15 5TJ (GB)
(74) Representative: Secerna LLP
(86) International application number: PCT/GB2019/050727
(87) International publication number: WO 2019/175594

(56) References cited:
- EP-A2- 0 104 541
- DE-A1- 4 300 264
- FR-A1- 2 872 859
- GB-A- 2 312 475
- RU-C1- 2 153 087
- US-A- 3 097 632

## Description

### BACKGROUND

### Technical Field

The present invention relates generally to the field of rotary engines and thermodynamic cycles thereof. More particularly, but not exclusively, the present invention concerns an improved rotary engine for use in plug-in hybrid electric vehicles (PHEVs).

### Description of the Related Art

Plug-in hybrid electric vehicles (PHEVs) have an electric motor and an internal combustion engine (ICE). The electric motor uses rechargeable batteries/ other energy storage device that can be recharged by plugging in to an external source of electric power, whilst the ICE uses a combustible fuel source such as petrol, diesel or gas.

One such suitable ICE is disclosed in WO2014/083204. This document discloses a spark-ignition engine of the rotary type with a double rotation centre. The engine comprises a stator with a stator central body having a compartment, a first side cover and a second side cover. The compartment includes an expansion compartment and a compression compartment and a combustion chamber at an upper portion of the compartment. It also includes a rotor with an expansion rotating element, a compressing rotating element and a hinging linear element interposed between said expansion rotating element and the compression rotating element. The rotor is arranged in the compartment of the stator central body. The expansion compartment comprises a concave inner surface and the compression compartment comprises a convex inner surface. With this prior art, the double rotation centre of the rotating mass optimises the thermodynamic efficiency.

The engine disclosed in WO2014/083204 (shown in Figure 1) is a spark ignition internal combustion engine having a 9-phase thermodynamic cycle. It relies on a complex design impacting on the cost of manufacturing, durability and lifespan of the various parts. Furthermore, whilst emissions are low, it is thought that these could be further reduced.

FR2872859A1 discloses an internal combustion rotary engine with trilobic annular piston (1) rotating according to two distinct centers of rotation R1 and R2 around a bi-arc shaped core (2) inside a thermodynamic chamber of hexa-arc shape (3). The assembly is sealed by 2 side covers (4 and 5) and it is provided with a haxa-arc shaped motion transfer pinion (6). This specific internal combustion rotary engine has 6 simultaneous strokes and operates on 2 independent stages.

EP0104541A2 discloses a process characterized by a cycle comprising a) compressing the air contained in the variable volume chamber, inside a preheating chamber, b) the expansion of the variable-volume chamber by the expansion of hot air contained in the preheating chamber, c) compressing the expanded hot air contained in the variable volume chamber into a combustion chamber where a fuel is introduced causing the mixture to burn, and d) the expansion of the variable volume chamber by the expansion therein of high temperature and high pressure combustion gas from the combustion chamber.

It is an object of the present invention to improve upon the prior art to provide a rotary engine for use in PHEVs, with a more efficient thermodynamic cycle and reduced emissions, with increased durability and being more cost-efficient to manufacture.

### SUMMARY OF THE INVENTION

In a first aspect of the invention there is provided a six-phase thermodynamic cycle for a rotary internal combustion engine with a double rotation centre, the engine comprising a housing with intersecting circular expansion and compression chambers, a dynamic central intake chamber and a static combustion chamber at the top thereof; a power rotor; a following rotor; a rotating shaft; and a drive means, the six-phase thermodynamic cycle comprising:
Phase 1 wherein in an intake phase, a volume of air enters the central intake chamber of the housing through a peripheral air intake port and mixes with recirculated exhaust gas from phase 3;
Phase 2 wherein in a first compression phase, the volume of air and recirculated exhaust gas from phase 1 is compressed at a low compression ratio by the reducing volume of the dynamic intake chamber within the housing;
Phase 3 wherein in a combined scavenge and exhaust gas recirculation phase, a portion of the volume of air and recirculated exhaust gas from phase 2 scavenges the static combustion chamber and partially scavenges the expansion chamber, the dynamic expansion chamber then merges with the dynamic central intake chamber recirculating the residual exhaust gas from phase 6 within the housing.
Phase 4 wherein in a second compression phase, the dynamic intake chamber separates to form a dynamic compression chamber and the residual volume of combined exhaust gas and air from phase 2 is compressed at a high compression ratio into the static combustion chamber within the housing;
Phase 5 wherein in a power phase, a dynamic expansion chamber is formed, originating from the static combustion chamber and torque is produced to turn the output shaft; and
Phase 6 wherein in an exhaust phase, exhaust gas from phase 5 is discharged from the dynamic expansion chamber through a peripheral exhaust port in the housing.

This six-phase thermodynamic cycle of a rotary internal combustion engine is significantly simplified compared with earlier similar thermodynamic cycles. The replacement of two intake phases and two exhaust phases by one intake phase, one exhaust phase and one exhaust gas recirculation phase, provides for significantly reduced exhaust emissions from a mechanically simpler, more robust, lower cost and more easily scalable internal combustion engine.

Preferably, phases 1, 2 and 3 of the six-phase thermodynamic cycle occur in succession. Preferably, phases 4, 5 and 6 of the six-phase thermodynamic cycle occur in succession. Preferably, during each phase of the thermodynamic cycle, at least a part of one other different phase of the cycle is also occurring simultaneously. Preferably, therefore, phases 1, 2 and 3 of the six-phase thermodynamic cycle occur simultaneously with at least a portion of one or more of phases 4, 5 and 6.

Preferably, phase 1 (intake) occurs simultaneously with the majority of phase 4 (second compression).

Preferably, phase 2 (first compression) occurs simultaneously with the majority of phase 5 (power).

Preferably, phase 3 (scavenge and exhaust recirculation) occurs in very close proximity to phase 6 (exhaust).

Preferably, when the central intake chamber achieves a maximum volume of air, the engine is at a rotation of top dead centre (TDC), or 0 degrees.

Preferably, during phase 1, the intake port is open throughout. The exhaust port may also be open. Preferably, intake air does not enter via the exhaust port due to the momentum of the exhaust gas discharging through the exhaust pipe.

Preferably, phase 1 occurs at a rotation of approximately between 260 degrees through to approximately 40 degrees rotation.

Preferably, phase 2 (first compression) occurs in a reducing volume of the dynamic central intake chamber of the housing. Preferably, compression is substantially created in a right hand side of the housing. Preferably, phase 2 comprises a relatively low compression ratio of approximately 2:1

Preferably, phase 2 occurs at a rotation of approximately between 40 degrees through to approximately 180 degrees rotation.

Preferably phase 3 comprises a portion of the air and recirculated exhaust gas from phase 2 passing from a right hand side of the housing to a left hand side via a static combustion chamber at top dead centre. Preferably, phase 3 comprises the introduction of water to cool exhaust gasses in the expansion chamber. Preferably, the combination of exhaust gas and air occurs in an expansion chamber of a left hand side of the housing. Preferably, in phase 3 the dynamic expansion chamber merges with the dynamic central intake chamber and the combined exhaust gas and air is drawn into the dynamic central intake chamber of the housing.

Preferably, phase 3 occurs at a rotation of approximately between 180 degrees through to approximately 220 degrees rotation.

Preferably, phase 4 (second compression) comprises the separation of the dynamic intake chamber to form the dynamic compression chamber of the housing. Preferably, the dynamic compression chamber is substantially created in a right hand side of the housing. Preferably, in phase 4, fuel is injected into the dynamic compression chamber (approximately 225 degree rotation). Preferably, during further compression in phase 4, the fuel is substantially vaporised. Preferably, during phase 4 a homogeneous charge mixture is created from the combined exhaust gas and air and vaporised fuel.

Preferably, phase 4 (second compression) occurs at a rotation of approximately between 220 degrees through to approximately TDC/0 degrees rotation.

Preferably a static combustion chamber is located at top dead centre (TDC). Preferably, the combustion chamber contains a variable compression ratio mechanism. Preferably, in phase 5 (power), conditions in the combustion chamber comprise a homogenous charge and a high compression ratio. Preferably, the thermodynamic cycle utilizes homogenous charge compression ignition (HCCI) triggered by the heat of the following rotor arriving at top dead centre and controlled by the variable compression ratio mechanism.

Preferably, the arrangement of the rotors transfers a high level of torque directly to the output shaft, immediately from top dead centre. This results in no loss of torque and momentum as is the case for reciprocating pistons connected to a rotating crankshaft.

Preferably, at 25 degrees rotation, high load maximum torque is delivered by the mechanism, utilising the very rapid burn rate and pressure increase of HCCI. This is not possible in reciprocating piston engines.

Preferably, due to the asymmetric expansion and compression chamber volumes, phase 5 delivers an over expansion compared to compression. This maximises the conversion of gas pressure to mechanical work at the output shaft. Preferably, phase 5 occurs approximately between TDC/0 degrees through to approximately 165 degrees rotation.

Preferably, in phase 6 (exhaust), the exhaust port is uncovered by the power rotor for exhaust discharge. Preferably, phase 6 occurs approximately between 165 degrees through to approximately 180 degrees rotation.

Preferably, the six-phase thermodynamic cycle delivers a power phase with each engine revolution.

In second aspect of the present invention there is provided a rotary, internal combustion engine with a double rotation centre adapted to execute the six-phase thermodynamic cycle according the first aspect, comprising: a housing with intersecting circular expansion and compression chambers, defining a dynamic central intake chamber and a static combustion chamber at the top thereof; a power rotor; following rotor; a rotating shaft; and a drive means, characterised in that the power rotor and the following rotor are arranged in interlocking relationship with one another and seated on different rotational axes within an expansion orbit and a compression orbit respectively, wherein the power rotor is configured to rotate on the shaft, which turns said drive means and the following rotor is configured to rotate driven via a linkage with said drive means.

Preferably, the following rotor comprises a pair of bearing members arranged in spaced parallel relationship with each other. Preferably, the following rotor comprises a substantially hollow rotor body arranged with the pair of bearing members comprising a closed head end and an open tail end. Preferably, the following rotor comprises a pair of counterweights arranged on the pair of bearing members in spaced parallel relationship with each other and substantially opposite said rotor body. With this arrangement, the interlocking relationship of the rotors and the drive means connecting the two rotors is simpler to manufacture and has greater durability and lifespan.

The following rotor for an comprises: a pair of bearing members arranged in spaced parallel relationship with each other, a substantially hollow rotor body arranged with the pair of bearing members comprising a closed head end and an open tail end, characterised in that the following rotor further comprises a pair of counterweights arranged on the pair of bearing members in spaced parallel relationship with each other and substantially opposite said rotor body.

With this arrangement, the following rotor is independently balanced allowing for significantly increased rotational speeds and therefore power output, with reduced engine vibrations.

The following statements may also apply to the first and second embodiment of the invention.

Preferably, the following rotor comprises at least one drive bearing arranged on the pair of bearing members in spaced parallel relationship with each other and substantially adjacent the head end of said rotor body for a linkage with said drive means.

The following rotor comprises: a pair of bearing members arranged in spaced parallel relationship with each other, a substantially hollow rotor body arranged with the pair of bearing members comprising a closed head end and an open tail end, characterised in that the following rotor further comprises at least one drive bearing arranged on the pair of bearing members in spaced parallel relationship with each other and substantially adjacent the head end of said rotor body for a linkage with said drive means.

With this arrangement, the following rotor can be driven independently of the power rotor by link with the drive means attached to the shaft, but on a different rotational axis to the power rotor. This arrangement significantly reduces the mechanical and thermal stresses on the rotor linkage drive means, allowing the radial dimensions of the engine to be significantly increased; significantly improving the durability of the engine mechanism and substantially reducing the manufacturing costs.

Preferably, the following rotor further comprises a pair of counterweights arranged on the pair of bearing members in spaced parallel relationship with each other and substantially opposite said rotor body.

The following statements may also apply to the first, second and third aspects of the invention.

Preferably, the drive means comprises at least one drive bar, most preferably two drive bars. Preferably, the drive bar is adapted rotate with the shaft from one end and provide the linkage with the following rotor at another end thereof. More preferably, the linkage is provided via a connection between a drive bar and a drive roller bearing of a following rotor.

Preferably, the drive bars are fixed to the shaft and rotate in synchronisation with the power rotor. Preferably, the drive roller bearings of the following rotor are configured to be seated within elongate slots of said drive bars. Preferably, therefore, the following rotor is configured to turn in synchronisation with the power rotor.

Preferably, the drive roller bearings are positioned on said following rotor to allow for the two rotors to have different centres of rotation. Preferably, the two rotors comprise different diameters of orbit.

Preferably, the following rotor bearing members are substantially cylindrical.

Preferably, the following rotor comprises a substantially semi-annular body. Preferably, the body is hollow and comprises a rounded head and a flat open tail. Preferably, the bearing members are mounted substantially parallel with one another on opposite sides of the body. Preferably, the bearing members share the same axis as the body such that approximately half of each bearing member is unattached or free. Preferably, the counterweight is mounted on the unattached/ free half to counteract the weight of the body. Preferably, the drive roller bearings are arranged on each bearing member substantially adjacent the head of the body.

Preferably, the power rotor comprises an outer body of substantially semi-cylindrical form. Preferably, the power rotor comprises a core of substantially three-quarter cylindrical form and smaller diameter. Preferably, the core extends from a flat side of the body. Preferably, the core is adapted to receive the shaft through a bore.

Preferably, the housing comprises a substantially annular body defining a chamber therein. Preferably, the chamber is defined by two intersecting circles with offset central axes of rotation and larger diameter on the left side relative to the diameter of the right side.

Preferably, the housing is configured to notionally provide different areas/ volumes/ sub-chambers within the chamber, most preferably, an expansion volume/ chamber, a compression volume/ chamber, a central intake volume/ chamber and a combustion volume/ chamber. Preferably, the combustion volume/ chamber is located at the top of the housing. Preferably the central intake volume/ chamber is located within the centre of the housing. Preferably, the central intake chamber and/or the compression chamber and/or the expansion chamber is dynamic, meaning that they are characterised by constant change depending on the relative positions of the rotors. Preferably, the expansion volume/ chamber and the compression volume/ chamber are disposed substantially as areas opposite to one another.

Preferably, the housing comprises adjacent intake and exhaust ports at a base thereof. Preferably, the ports are biased towards the larger diameter left side of the chamber.

Preferably, the housing comprises a variable compression ratio mechanism configured to adjust the volume of the combustion chamber within the housing, which may comprise a glow plug. Preferably, the variable compression ratio mechanism is provided at a top of the housing.

Preferably, the housing comprises a fuel injector, biased towards the top of the housing in communication with the compression volume/ chamber.

Preferably, the housing comprises a water injector, biased towards the top of the housing, in communication with the expansion volume/ chamber.

Preferably, in use, the power rotor substantially occupies the left side intersecting circle of the housing chamber and the following rotor substantially occupies the right intersecting circle of the housing chamber.

The change from side intake ports to peripheral intake ports enables multiple units to be stacked closely together.

Preferably, the housing comprises a water cooling jacket.

### BRIEF DESCRIPTION OF THE DRAWINGS

For a better understanding of the invention, and to show how exemplary embodiments may be carried into effect, reference will now be made to the accompanying drawings in which:

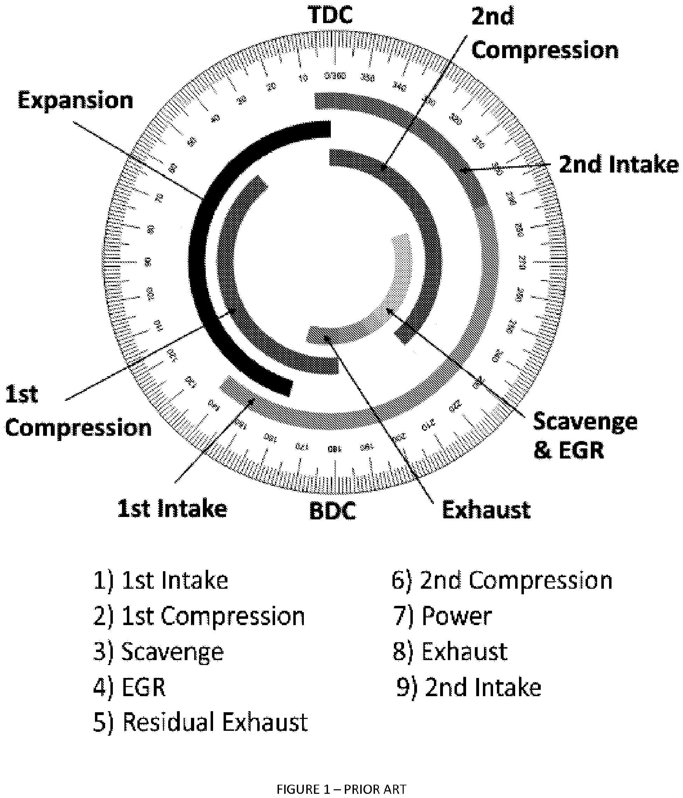

Figure 1 is a diagrammatic representation of a PRIOR ART 9-phase thermodynamic cycle of WO2014/083204;
Figure 2 is a diagrammatic representation of a six-phase thermodynamic cycle of a preferred embodiment of the present invention;
Figure 3 is an exploded perspective view of the engine according to a preferred embodiment of the invention;
Figure 4 is a perspective view of a housing according to Figure 3;
Figure 5 is a perspective schematic internal view of a power rotor according to Figure 3;
Figure 6 is a perspective external view of a power rotor according to Figure 3;
Figure 7 is a perspective schematic view of a following rotor in a first rotation configuration according to Figure 3;
Figure 8 is a perspective schematic view of a following rotor in a second rotation configuration according to Figure 3;
Figure 9 is a perspective schematic internal view of a following rotor according to Figure 3;
Figure 10 is a perspective schematic end view of the assembled engine of Figure 3 in a first top dead centre (TDC) phase of rotation;
Figure 11 is a perspective schematic end view of the assembled engine of Figure 3 in a second bottom dead centre (BDC) phase of rotation;
Figure 12 is a cross-sectional side view of the engine of Figure 3 showing the components of the engine;
Figure 13 is a cross-sectional side view of the engine of Figure 3 showing expansion and compression volumes;
Figure 14 is a chart and table showing air cycle comparisons between PRIOR ART Otto engine, PRIOR ART Diesel engine and the present invention of Figure 3;
Figure 15 is a chart showing the estimated brake thermal efficiency of the engine of Figure 3;
Figure 16 is a chart showing the estimated low emission zone operation of the engine of Figure 3;
Figure 17 shows a schematic side view of the engine of Figure 3 at TDC at the start of the power phase and end of the intake phase;
Figure 18 shows a schematic side view of the engine of Figure 3 at 90 degree rotation in the power phase and the start of the first compression phase;
Figure 19 shows a schematic side view of the engine of Figure 3 at 162 degree rotation during completion of the power phase and the nearing of the completion of the first compression phase;
Figure 20 shows a schematic side view of the engine of Figure 3 at 180 degree rotation during completion of the exhaust phase and start of the scavenge phase;
Figure 21 shows a schematic side view of the engine of Figure 3 at 225 degree rotation during the scavenge and EGR phase and start of the second compression phase;
Figure 22 shows a schematic side view of the engine of Figure 3 at 290 degree rotation in the intake phase and continuation of the second compression phase; and
Figure 23 shows a schematic side view of the engine of Figure 3 at 350 degree rotation nearing completion of the intake phase and the second compression phase.

### DETAILED DESCRIPTION OF THE EXEMPLARY EMBODIMENTS

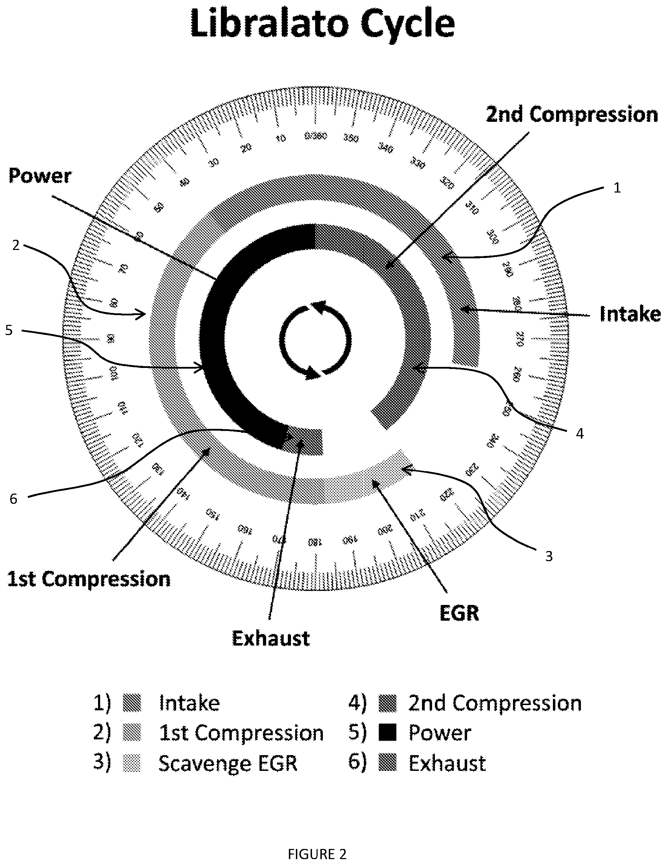

Figures 2 and 17 to 23 show a first embodiment of the invention, being a six-phase thermodynamic cycle for a rotary internal combustion engine 1 with a double rotation centre, the engine 1 comprising: a housing 10 with intersecting circular expansion A' and compression B' orbits, defining respective dynamic chambers, a dynamic central intake chamber and a static combustion chamber at the top thereof; a power rotor 20; a following rotor 30; a rotating shaft 40; and a drive means 50, the six-phase thermodynamic cycle comprising:
Phase 1 wherein in an intake phase a volume of air enters the central intake chamber of the housing 10 through a peripheral air intake port 11 and mixes with recirculated exhaust gas from phase 3;
Phase 2 wherein in a first compression phase, the volume of air and recirculated exhaust gas from phase 1 is compressed at a low compression ratio by the reducing volume of the intake chamber within the housing 10;
Phase 3 wherein in a combined scavenge and exhaust gas recirculation phase, a portion of the volume of air and recirculated exhaust gas from phase 2 scavenges the combustion chamber and partially scavenges the expansion chamber, the expansion chamber then merges with the central intake chamber recirculating the residual exhaust gas from phase 6 within the housing 10;
Phase 4 wherein in a second compression phase, the intake chamber separates to form a compression chamber and the residual volume of combined exhaust gas and air from phase 2 is compressed at a high compression ratio into the combustion chamber
Phase 5 wherein in a power phase an expansion chamber is formed, originating from the combustion chamber and torque is produced to turn the output shaft 40; and
Phase 6 wherein in an exhaust phase, exhaust gas from phase 5 is discharged from the expansion chamber through a peripheral exhaust port 12 in the housing 10.

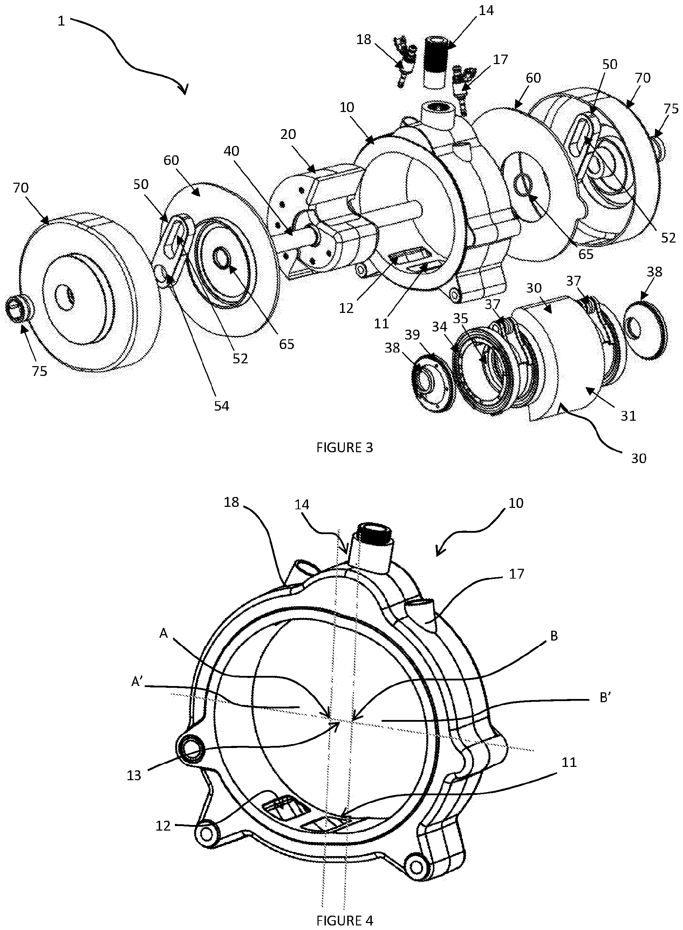

Figures 3 to 13 show a rotary, internal combustion engine 1 with a double rotation centre adapted to execute the six-phase thermodynamic cycle according to the above embodiment. As shown in Figure 3, the rotary, internal combustion engine 1 has a double rotation centre A, B and comprises: a housing 10 with intersecting circular expansion A' and compression B' orbits, defining respective dynamic chambers, and a static combustion chamber at the top thereof; a power rotor 20; a following rotor 30; a rotating shaft 40; and a drive means 50, the power rotor 20 and the following rotor 30 being arranged in interlocking relationship with one another and seated on different rotational axes A, B, within the expansion orbit A' and the compression orbit B' respectively, wherein the power rotor 20 is configured to rotate on the shaft 40 which turns said drive means 50 and the following rotor 30 is configured to rotate driven via 2 linkages 37 with said drive means 50.

Figure 3 shows an exploded view of the main components of the engine 1 of the present invention. In summary, the power rotor 20 and the following rotor 30 rotate inside the housing 10.

Figure 4 shows the housing 10 made from aluminium and comprising a substantially annular shape defining a marginally elliptical chamber 13 therein. The chamber 13 is defined by two intersecting circles A', B' with offset central axes of rotation A, B. The diameter of the left side A' is greater than the diameter of the right side B' of the chamber due to a greater diameter intersecting circle A', compared with the diameter of intersecting circle B'. The housing 10 is water cooled by a water jacket (not exposed). The intake port 11 and the exhaust port 12 are provided through the housing 10 at a base thereof, but biased towards the side of the chamber 13 defined by circle A'. Substantially opposite the ports 11, 12 at the top of the housing 10 and sitting approximately on the intersection of the two circles A', B', there is mounted a threaded cylindrical insert 14 with a glow plug 14a comprising a variable compression ratio mechanism to vary the compression volume within the combustion chamber. Mounted on opposite sides of the glow plug 14a again biased towards the top of the housing 10, is a fuel injection port 17 and a water injection port 18. The fuel injection port 17 enters the chamber 13 in circle B' at an angle that delivers fuel injection close to the housing 10. Likewise, the water injection port 18 mirrors this arrangement in circle A'.

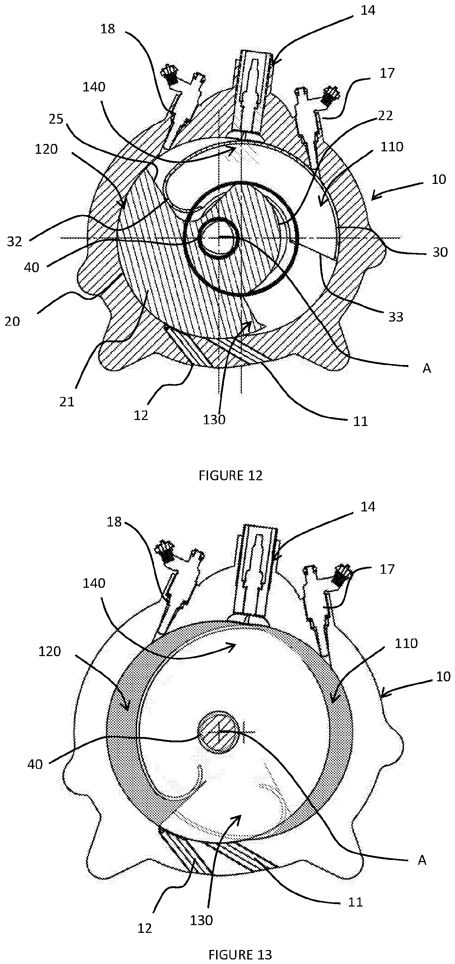

As shown in Figures 12 and 13, the power rotor 20 substantially occupies the left side (roughly A') of the chamber 13 and the following rotor 30 substantially occupies the right side (roughly B') of the chamber 13, defining an approximately crescent shaped dynamic expansion chamber 120 and an approximately crescent shaped dynamic compression chamber 110, respectively.

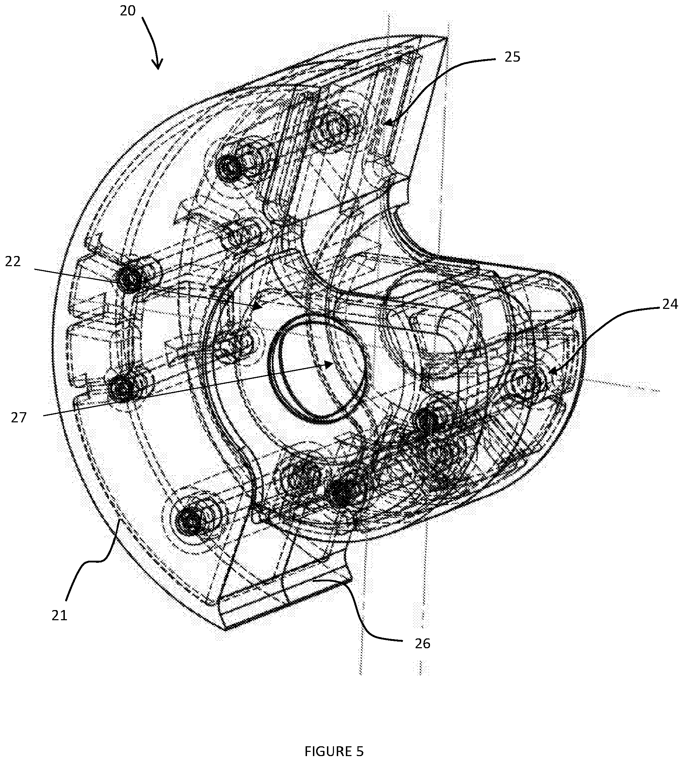

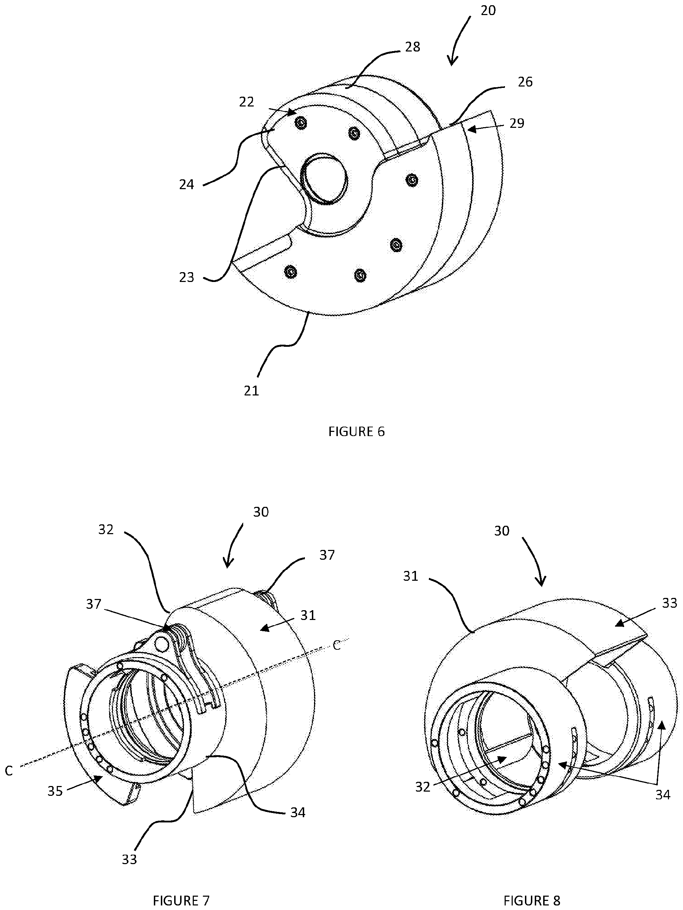

As shown in Figures 5 and 6, the power rotor 20 comprises an aluminium outer body in two halves 21, 28, 29 of substantially semi-cylindrical form. A steel core 22 of substantially three-quarter cylindrical form and smaller diameter, extends from a flat side of the body 21. The flat side of the body 21 comprises a thrust plate 25. On one side of the core 22 and a trail plate 26 on the other side of the core 22. The core 22 also comprises flat face 23 slightly inclined to provide a slightly less than 90 degree angle with the thrust plate 25. A centrally located shaft bore 27 is provided through the core 22, which lies close to the flat face 23. The flat face 23 provides a toe on the core 22. Each of the body 21 and the core 22 comprise an aluminium cover 28, 29, whilst the thrust plate 25 is treated with a ferrous bonding thermal barrier coating.

As shown in Figures 7 and 8, the following rotor 30 is made up of a steel, substantially semi-annular body 31. The body 31 is hollow and comprises a rounded head 32 and a flat open tail 33. A pair of hollow bearing cylinders 34 is mounted, one either side of the body 31, the bearing cylinders 34 being mounted parallel with one another and on the same axis C as the body 31 such that approximately half of each bearing cylinder 34 is unattached or free. Each bearing cylinder 34 comprises a counterweight 35 mounted on the unattached/ free half to counteract the weight of the body 31.

The following rotor 30 is assembled with a pair of inner side plates 38 each with bearings 39.

In addition to the power rotor 20, the following rotor 30 and side plates 38, the engine 1 further comprises two outer side plates 60, two inner shaft bearings 65, two drive bars 50 outside of the side plates 60, an outer casing 70 provided in two portions either side of the drive bars 50 and finally, two outer shaft bearings 75 provided either side of the outer casing 70.

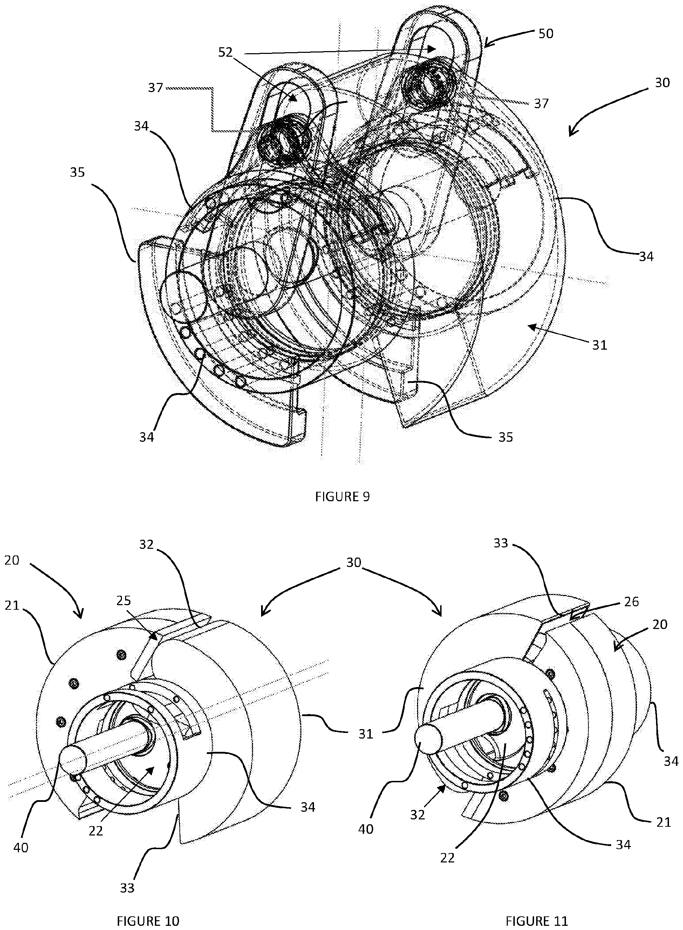

Figures 10 and 11 show the combined rotating assembly of shaft 40, power rotor 20 and following rotor 30, (but not showing the following rotor counterweights 35, drive roller bearings 37 and drive bars 50 for ease). During assembly, the power rotor 20 and the following rotor 30 are seated together as shown in figures 10 and 11, with the shaft 40 extending through the core 22 of the power rotor and through each bearing cylinder 34 of the following rotor 30. The shaft 40 is located on the axis A of the housing 10.

The following rotor bearing cylinders 34 extend through the outer side plates 60 such that the outer side plates 60 sit against the power rotor body 21. The drive roller bearings 37 of the following rotor 30 are positioned outside of the outer side plates 60 and seated within elongate slots 52 of the drive bars 50. The drive bars 50 are themselves seated on the drive shaft 40 via circular apertures 54 biased towards one end thereof outside of the inner shaft bearings 65. The inner side plate 38 of the following rotor 30 assembly fits around the shaft 40 and on the inside of the following rotor bearing cylinders 34. The outer casing 70 is seated on the shaft 40 to cover the entire working assembly including the main shaft bearings 75.

As shown in Figure 9, the drive bars 50 are fixed to the shaft 40 and rotate in synchronisation with the power rotor 20. The following rotor 30 drive roller bearings 37 are seated within the drive bar slots 52 and therefore, the following rotor 30 is also turned in synchronisation with the power rotor 20. The position of the drive roller bearings 37 allows for the two rotors 20, 30 to have different centres of rotation A, B and different diameters of orbit. As the drive bars 50 rotate, the following rotor 30 drive roller bearings 37 travel linearly within the drive bar slots 52 with low friction, whilst the head 32 of the following rotor 30 maintains an accurate and consistent proximity to the power rotor 20 thrust plate 25. The following rotor counterweights 35, drive roller bearings 37 and drive bars 50 rotate outside of the outer side plates 60.

With this arrangement, both rotors are independently balanced.

Figure 10 shows the relative rotor 20, 30 positions at top dead centre (000 degrees) and Figure 11 shows the relative rotor 20, 30 positions at bottom dead centre (180 degrees). It can be seen that the shapes of the two rotors 20, 30 are inter-locking. A toe 24 of the power rotor 20 fits inside the shell-like cavity of the following rotor 30. The head 32 of the following rotor 30 sweeps linearly over the power rotor 20 thrust plate 25. A non-contact sealing between the following rotor head 32 and the power rotor thrust plate 25 is provided by both sealing surfaces comprising abradable thermal barrier coatings designed to wear sufficiently to expose a minimum clearance between the following rotor head 32 and the power rotor thrust plate 25. The inertial forces of the masses of the rotors 20, 30 mean that during combustion and expansion phases, the clearance between the following rotor head 32 and the power rotor thrust plate 25 is under compression, contributing to effective sealing. A small percentage of sealing losses are not detrimental since these losses contribute to the cycle's internal exhaust gas recirculation.

Figure 12 shows a cross sectional view of the engine 1. The fuel injection mechanism 17 is directed into a dynamic compression volume 110. The water injection mechanism 18 is directed into a dynamic expansion volume 120. The variable compression ratio mechanism 14 and the water injection mechanism 18 are not strictly necessary for the basic performance of the engine 1.

Figure 13 shows the crescent-shaped working expansion volume (left) 120 and the crescent-shaped working compression volume (right) 110 created by the interaction of the two rotors 20, 30 rotating within the housing 10. Since the diameter of the orbit of the power rotor 20 on the left side is greater than the diameter of the orbit of the following rotor 30 on the right side, the expansion volume 120 is greater than the compression volume 110, by approximately 32%. This over-expansion compared to the compression allows more pressure to be converted into mechanical work than in a traditional piston engine where the expansion volume and the compression volume are equal.

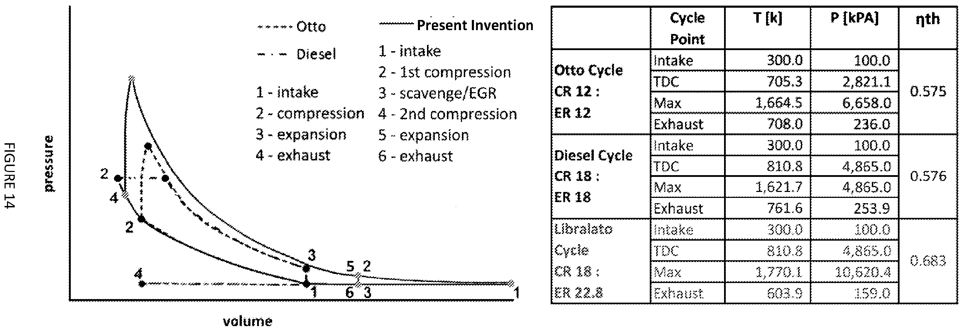

Figure 14 shows a standard air cycle comparison between the thermodynamic cycles of PRIOR ART Otto, PRIOR ART Diesel and the engine of the present invention. The thermal efficiency of the engine 1 of the present invention can be theoretically proven using working compression (18) and expansion (22.8) ratios. The thermal efficiency of the thermodynamic cycle of the present invention is higher than that of either PRIOR ART cycles at 68.3%.

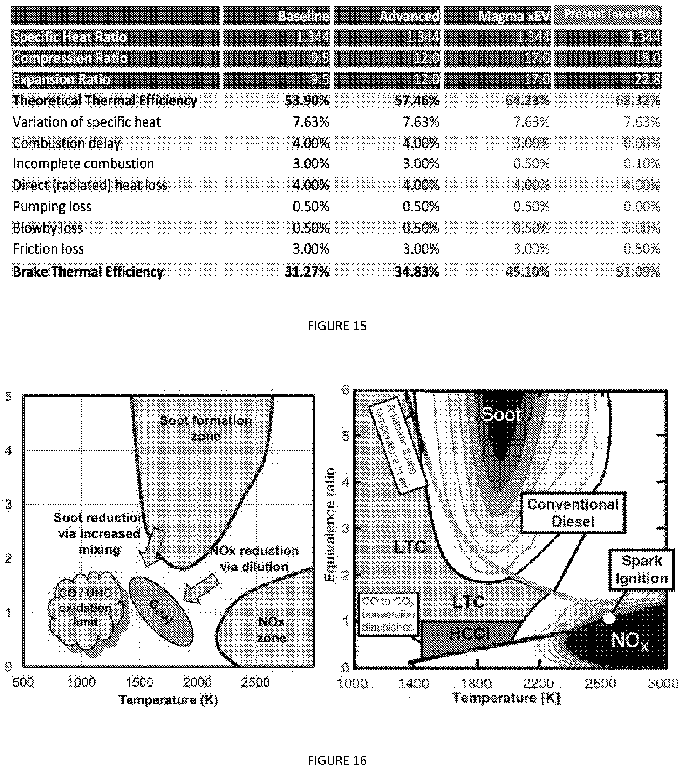

Figure 15 shows an estimated >50% brake thermal efficiency of the engine 1 of the present invention, when the other key aspects of gas exchange efficiency, mechanical efficiency and combustion efficiency are taken into account.

Figure 16 shows the estimated Euro 6/7 compliant low emission zone operation of the engine 1 of the present invention without after-treatment, because of low combustion temperatures <1,800 K (<1,500 degrees C) due to the Homogenous Charge Compression Ignition (HCCI) strategy and internal cooled Exhaust Gas Recirculation (EGR).

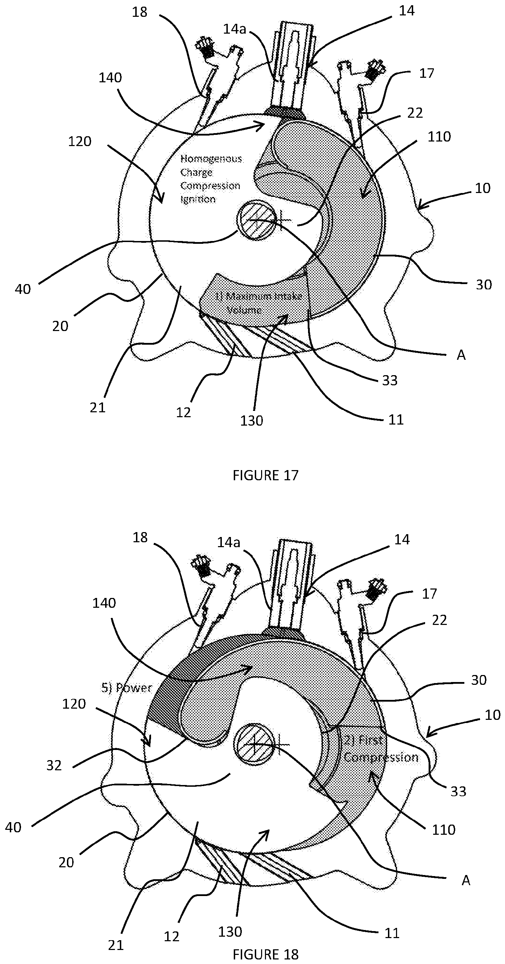

The various phases of the thermodynamic cycle will now be described with reference to Figures 17 to 23. Due to the overlapping of phases 1 - 3 with phases 4-6, many of the phases occur simultaneously with one or more other phases and this can be seen clearly in Figure 2.

For ease, the phases have been described in consecutive order, but beginning with phase 5 and ending with phase 1.

As shown in Figure 17, top dead centre (TDC/ 000) is the start of a power phase (identified as phase 5 of the thermodynamic cycle). The fuel-air mixture is a homogenous charge due to the highly turbulent flow of the gas being fully compressed into the combustion chamber 140. The following rotor 30 retains a significant amount of heat from the combustion event and this thermal radiation is only delivered to the fuel-air mixture as the following rotor 30 arrives at TDC. The combination of the compression of the fuel-air mixture and the thermal radiation from the following rotor 30 provide accurate control of the homogenous charge compression ignition of the fuel air mixture. TDC is also the point of maximum volume of an intake phase 1 in the central intake chamber 130.

Figure 18 shows rotation by 90 degrees, in which the power phase 5 is providing high pressure in the expansion chamber 120 on the left side of the housing 10 and is transferring torque directly to the shaft 40 via the power rotor 20. This direct mechanism is more efficient than a piston-connecting-rod-crankshaft arrangement and enables the delivery of high output torque immediately from TDC. This architecture delivers approximately three times higher torque compared to piston engines due to the leverage effect of the power rotor 20 acting directly on the shaft 40 and because the thermodynamic cycle delivers a power phase 5 in every revolution. During the power phase 5, the intake volume starts to be compressed in the first compression phase 2 on the right side compression chamber 110 of the housing 10. Both rotors 20, 30 utilise non-contact sealing with reduced friction compared to a piston engine. An outside circumferences of both rotors 20, 30 present very large sealing surfaces with minimal clearances with the housing 10. Sides of the rotors 20, 30 utilize *labyrinth* sealing grooves adjacent to the outer side plates 60. A small percentage of sealing losses (^{~}5%) are not detrimental since these losses contribute to the internal exhaust gas recirculation of the cycle.

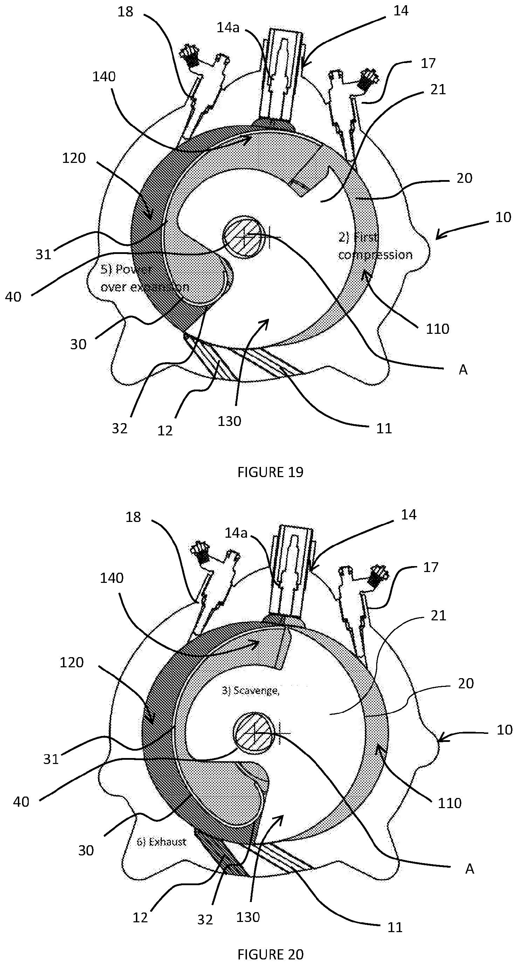

Figure 19 shows rotation to 162 degrees, by which time the power phase 5 is complete and the power rotor 20 is about to expose the exhaust port 12 to begin the exhaust phase 6. On the right side of the housing 10 in the compression chamber 110, the first compression phase 2 is also nearing completion. This phase 2 provides a relatively low compression ratio of about 2:1.

Figure 20 shows rotation to 180 degrees, in which the exhaust phase 6 has completed and the pressure in the expansion chamber 120 has reduced to ambient. The tail 33 of the following rotor 30 exposes the combustion chamber 140 and the pressure from the first compression (phase 2) delivers a scavenge (part of phase 3) which clears and cools the combustion chamber 140 of residual exhaust.

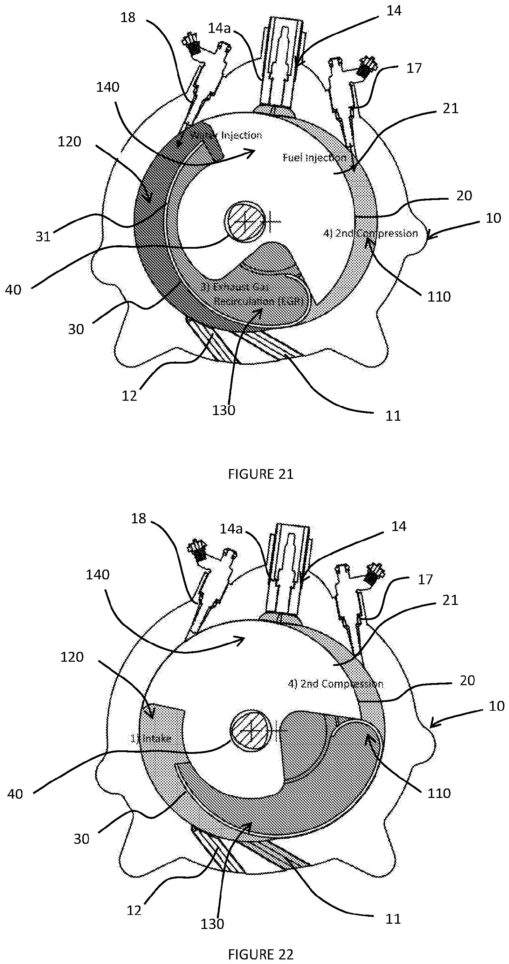

Figure 21 shows rotation to 225 degrees, where phase 3 provides a scavenge and exhaust gas recirculation (EGR) phase. Water is injected from injection port 18 into the expansion volume 120 which has the effect of cooling the exhaust gas and preventing the build-up of carbon deposits inside the engine 1. The cooled residual exhaust gas in the expansion chamber 120 is drawn into the central intake chamber 130 due to the low pressure induced by the expanding volume. This eliminates the need for an intake port on the outer side plate 60 of the engine 1. In parallel, the head 32 of the following rotor 30 engages with the housing 10 on the right side of the engine 1 to start the second working compression phase 4. At this point the direct fuel injection from fuel injector 17 into the compression volume 110 commences to allow sufficient time and space for full vaporisation of the fuel.

Figure 22 shows rotation to 290 degrees, in which the low pressure of the expanding central intake volume 130 is drawing air into the engine 1 via the Intake port 11 in the intake phase 1. Air is not drawn into the engine 1 via the exhaust port 12 due to the momentum of the exhaust gas travelling in the exhaust pipe (not shown). In parallel, the second compression phase 4 continues in the compression chamber 110 on the right side of the housing 10, fully mixing the fuel and air to create a homogenous charge mixture.

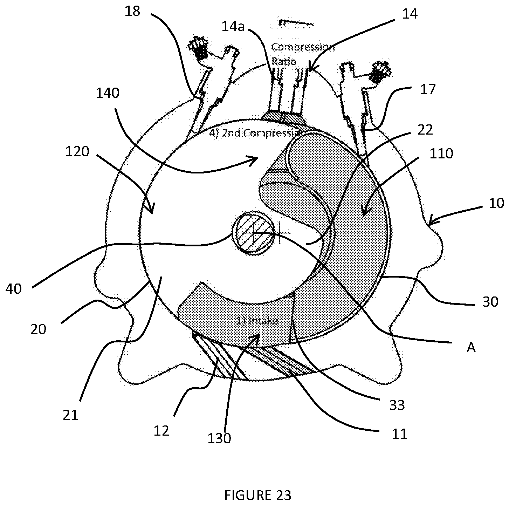

By 350 degrees (Figure 23) the intake phase 1 is nearing completion. This intake volume is almost three times the volume of the second working compression volume (phase 4) and contains approximately 20% cooled exhaust gas recirculation (EGR). The second compression phase 4 is also nearing completion. The relatively cool and high EGR percentage mixture is well prepared for homogenous charge compression ignition (HCCI), which delivers very rapid but low peak temperature combustion for maximum efficiency and minimum emissions. Since the combustion chamber 140 has no valves, a glow plug 14a) can be mounted into a threaded cylinder insert 14. By rotating the cylinder insert 14, the volume of the combustion chamber 140 can be altered and the compression ratio can be varied. This allows a high compression ratio to be used for low loads, maximising efficiency with a lean mixture, whilst for high loads with a richer mixture, the compression ratio can be reduced to avoid engine knocking and still maintain efficient and low emission HCCI operation.

The engine 1 of the present invention is mechanically simple and low cost to manufacture whilst being power dense (2kW/kg, 145kW/L). This makes it suitable as a range-extending ICE for PHEVs.

With the two inter-locking rotors (the power rotor 20 and the following rotor 30) being on different rotational axes A, B, exchange gases between the four dynamic chambers (intake 130, compression 110, combustion 140 and expansion 120) deliver low pumping losses.

The volume of the expansion chamber 120 is 32% greater than that of the compression chamber 110, providing an 'over-expansion' which directly converts pressure to mechanical work with greater efficiency, over a much greater duration than a piston/connecting-rod/ crankshaft architecture.

The homogenous charge compression ignition utilizes the heat absorbed by the following rotor 30 and is easily controllable via a simple variable compression ratio mechanism 14, 14a by adjusting the volume of the combustion chamber 140. This allows lean fuel-air mixtures and high compression ratios, but with low peak combustion temperatures and low NOx formation.

The non-contact sealing arrangement with abradable thermal barrier coatings is sufficient at speeds over 3,000 rpm and the perfectly balanced rotors 20, 30 can operate at up to 5,000 rpm without significant friction losses. The small percentage of sealing losses observed is acceptable since this merely contributes to the cycle's internal exhaust gas recirculation (EGR).

Water injection at port 18 maximises the power produced, cools the EGR and prevents carbon deposits building up inside the engine.

Although a preferred embodiment has been shown and described, it will be appreciated by those skilled in the art that various changes and modifications might be made without departing from the scope of the invention as defined in the appended claims.

## Claims

1. A six-phase thermodynamic cycle for a rotary internal combustion engine (1) with a double rotation centre, the engine (1) comprising a housing (10) with intersecting circular expansion and compression chambers (120, 110), a dynamic central intake chamber (130) and a static Z combustion
chamber (140) at the top thereof; a power rotor (20); a following rotor (30); a rotating shaft (40); and a drive means (50), the six-phase thermodynamic cycle comprising:
Phase 1 wherein in an intake phase, a volume of air enters the central intake chamber (130) of the housing (10) through a peripheral air intake port (11) and mixes with recirculated exhaust gas from phase 3;
Phase 2 wherein in a first compression phase, the volume of air and recirculated exhaust gas from phase 1 is compressed at a low compression ratio by the reducing volume of the dynamic intake chamber (130) within the housing (10);
Phase 3 wherein in a combined scavenge and exhaust gas recirculation phase, a portion of the volume of air and recirculated exhaust gas from phase 2 scavenges the static combustion chamber (140) and partially scavenges the expansion chamber (120), the dynamic expansion chamber (120) then merges with the dynamic central intake chamber (130) recirculating the residual exhaust gas from phase 6 within the housing (10);
Phase 4 wherein in a second compression phase, the dynamic intake chamber (130) separates to form a dynamic compression chamber (110) and the residual volume of combined exhaust gas and air from phase 2 is compressed at a high compression ratio into the static combustion chamber within the housing (10);
Phase 5 wherein in a power phase, a dynamic expansion chamber (120) is formed, originating from the static combustion chamber (140) and torque is produced to turn the output shaft (40); and
Phase 6 wherein in an exhaust phase, exhaust gas from phase 5 is discharged from the dynamic expansion chamber (120) through a peripheral exhaust port (12) in the housing (10).

2. The thermodynamic cycle according to claim 1, wherein phases 1, 2 and 3 of the six-phase thermodynamic cycle occur in succession.

3. The thermodynamic cycle according to claims 1 or 2, wherein phases 4, 5 and 6 of the six-phase thermodynamic cycle occur in succession.

4. The thermodynamic cycle according to any one of claims 1 to 3, wherein during each phase of the thermodynamic cycle, at least a part of one other different phase of the cycle is also occurring simultaneously.

5. The thermodynamic cycle according to claim 4, wherein therefore, phases 1, 2 and 3 of the six-phase thermodynamic cycle occur simultaneously with at least a portion of one or more of phases 4, 5 and 6.

6. The thermodynamic cycle according to any one of claims 1 to 5, wherein phase 1 (intake) occurs simultaneously with the majority of phase 4 (second compression).

7. The thermodynamic cycle according to any one of claims 1 to 6, wherein phase 2 (first compression) occurs simultaneously with the majority of phase 5 (power).

8. The thermodynamic cycle according to any one of claims 1 to 7, wherein phase 3 (scavenge and exhaust recirculation) occurs in very close proximity to phase 6 (exhaust).

9. The thermodynamic cycle according to any one of claims 1 to 8, wherein phase 3 comprises a portion of the air and recirculated exhaust gas from phase 2 passing from a right hand side of the housing (10) to a left hand side via a static combustion chamber (140) at top dead centre.

10. The thermodynamic cycle according to claim 9, wherein phase 3 comprises the introduction of water to cool exhaust gasses in the expansion chamber (120).

11. The thermodynamic cycle according to any one of claims 1 to 10, wherein in phase 3 the dynamic expansion chamber (120) merges with the dynamic central intake chamber (130) and the combined exhaust gas and air is drawn into the central intake chamber (130) of the housing (10).

12. The thermodynamic cycle according to any one of claims 1 to 11, wherein in phase 4, fuel is injected into the compression chamber (110) (approximately 225 degree rotation) and during further compression in phase 4, the fuel is substantially vaporised.

13. The thermodynamic cycle according to claim 12, wherein during phase 4 a homogeneous charge mixture is created from the combined exhaust gas and air and vaporised fuel.

14. The thermodynamic cycle according to any one of claims 1 to 13, wherein in phase 5 (power), conditions in the combustion chamber (140) comprise a homogenous charge and a high compression ratio.

15. A rotary, internal combustion engine (1) with a double rotation centre adapted to execute the six-phase thermodynamic cycle according to any one of claims 1 - 14, comprising: a housing (10) with intersecting circular expansion and compression chambers (120, 110), defining a dynamic central intake chamber (130) and a static combustion chamber (140) at the top thereof; a power rotor (20); a following rotor (30); a rotating shaft (40); and a drive means (50), **characterised in that** the power rotor (20) and the following rotor (30) are arranged in interlocking relationship with one another and seated on different rotational axes within an expansion orbit (A') and the compression orbit (B') respectively, wherein the power rotor (20) is configured to rotate on the shaft (40), which turns said drive means (50) and the following rotor (30) is configured to rotate driven via a linkage (37) with said drive means (50).

## Patentansprüche

1. Thermodynamischer Sechs-Phasen-Zyklus für einen Kreiskolben-Verbrennungsmotor (1) mit einer doppelten Drehmitte, der Motor (1) umfassend ein Gehäuse (10) mit sich überschneidenden kreisförmigen Expansions- und Kompressionskammern (120, 110), einer dynamischen mittleren Ansaugkammer (130) und einer statischen Brennkammer (140) an der Oberseite davon, einen Leistungsrotor (20), einen Folgerotor (30), eine Drehwelle (40) und eine Antriebseinrichtung (50), der thermodynamische Sechs-Phasen-Zyklus Folgendes umfassend:
Phase 1, wobei in einer Ansaugphase ein Luftvolumen durch eine periphere Lufteinlassöffnung (11) in die mittlere Ansaugkammer (130) des Gehäuses (10) eintritt und sich mit rückgeführtem Abgas aus Phase 3 mischt;
Phase 2, wobei in einer ersten Verdichtungsphase das Luftvolumen und rückgeführtes Abgas aus Phase 1 durch das sich verringernde Volumen der dynamischen Ansaugkammer (130) innerhalb des Gehäuses (10) mit einem niedrigen Verdichtungsverhältnis verdichtet wird;
Phase 3, wobei in einer kombinierten Spül- und Abgasrückführungsphase ein Teil des Luftvolumens und des rückgeführten Abgases aus Phase 2 die statische Brennkammer (140) spült und teilweise die Expansionskammer (120) spült, wobei die dynamische Expansionskammer (120) dann mit der dynamischen mittleren Ansaugkammer (130) vereint wird, die das restliche Abgas aus Phase 6 innerhalb des Gehäuses (10) zurückführt;
Phase 4, wobei sich in einer zweiten Verdichtungsphase die dynamische Ansaugkammer (130) abgetrennt wird, um eine dynamische Kompressionskammer (110) zu bilden, und das restliche Volumen von kombiniertem Abgas und Luft aus Phase 2 mit einem hohen Verdichtungsverhältnis in der statischen Brennkammer in dem Gehäuse (10) verdichtet wird;
Phase 5, wobei in einer Leistungsphase eine dynamische Expansionskammer (120) gebildet wird, die von der statischen Brennkammer (140) ausgeht, und ein Drehmoment erzeugt wird, um die Ausgangswelle (40) zu drehen; und
Phase 6, wobei in einer Abgasphase Abgas aus Phase 5 durch eine periphere Abgasöffnung (12) in dem Gehäuse (10) aus der dynamischen Expansionskammer (120) abgeleitet wird.

2. Thermodynamischer Zyklus nach Anspruch 1, wobei Phase 1, 2 und 3 des sechsphasigen thermodynamischen Zyklus nacheinander erfolgen.

3. Thermodynamischer Zyklus nach Anspruch 1 oder 2, wobei Phase 4, 5 und 6 des sechsstufigen thermodynamischen Zyklus nacheinander erfolgen.

4. Thermodynami scher Zyklus nach einem der Ansprüche 1 bis 3, wobei während j eder Phase des thermodynamischen Zyklus mindestens ein Teil einer anderen, verschiedenen Phase des Zyklus auch gleichzeitig erfolgt.

5. Thermodynamischer Zyklus nach Anspruch 4, wobei daher Phase 1, 2 und 3 des sechsphasigen thermodynamischen Zyklus gleichzeitig mit mindestens einem Teil einer oder mehrerer von Phase 4, 5 und 6 erfolgt.

6. Thermodynamischer Zyklus nach einem der Ansprüche 1 bis 5, wobei Phase 1 (Ansaugung) gleichzeitig mit dem Großteil von Phase 4 (zweite Verdichtung) erfolgt.

7. Thermodynamischer Zyklus nach einem der Ansprüche 1 bis 6, wobei Phase 2 (erste Verdichtung) gleichzeitig mit dem Großteil von Phase 5 (Leistung) erfolgt.

8. Thermodynamischer Zyklus nach einem der Ansprüche 1 bis 7, wobei Phase 3 (Spülung und Abgasrückführung) in unmittelbarer Nähe von Phase 6 (Abgas) erfolgt.

9. Thermodynamischer Zyklus nach einem der Ansprüche 1 bis 8, wobei Phase 3 einen Anteil der Luft und des rezirkulierten Abgases von Phase 2 umfasst, die von einer rechten Seite des Gehäuses (10) über eine statische Brennkammer (140) am oberen Totpunkt zu einer linken Seite strömen.

10. Thermodynamischer Zyklus nach Anspruch 9, wobei Phase 3 die Einleitung von Wasser zur Kühlung der Abgase in der Expansionskammer (120) umfasst.

11. Thermodynamischer Zyklus nach einem der Ansprüche 1 bis 10, wobei in Phase 3 die dynamische Expansionskammer (120) mit der mittleren dynamischen Ansaugkammer (130) vereint wird und das kombinierte Abgas und die Luft in die mittlere Ansaugkammer (130) des Gehäuses (10) gesaugt werden.

12. Thermodynamischer Zyklus nach einem der Ansprüche 1 bis 11, wobei in Phase 4 Kraftstoff in den Kompressionskammer (110) eingespritzt wird (ca. 225 Grad Drehung) und während einer weiteren Verdichtung in Phase 4 der Kraftstoff im Wesentlichen verdampft wird.

13. Thermodynamischer Zyklus nach Anspruch 12, wobei in Phase 4 ein homogenes Ladungsgemisch aus dem kombinierten Abgas und Luft und verdampftem Kraftstoff erzeugt wird.

14. Thermodynamischer Zyklus nach einem der Ansprüche 1 bis 13, wobei in Phase 5 (Leistung) die Bedingungen in der Brennkammer (140) eine homogene Ladung und ein hohes Verdichtungsverhältnis umfassen.

15. Kreiskolben-Verbrennungsmotor (1) mit einer doppelten Drehmitte, der zum Ausführen des thermodynamischen Sechs-Phasen-Zyklus nach einem der Ansprüche 1 bis 14 geeignet ist, umfassend: ein Gehäuse (10) mit sich überschneidenden kreisförmigen Expansions- und Kompressionskammern (120, 110), die eine dynamische mittlere Ansaugkammer (130) und eine statische Brennkammer (140) an deren Oberseite definieren, einen Leistungsrotor (20), einen Folgerotor (30), eine Drehwelle (40) und eine Antriebseinrichtung (50), **dadurch gekennzeichnet, dass** der Leistungsrotor (20) und der Folgerotor (30) in einer ineinandergreifenden Beziehung zueinander angeordnet sind und auf unterschiedlichen Drehachsen innerhalb einer Expansionsbahn (A') bzw. der Kompressionsbahn (B') sitzen, wobei der Leistungsrotor (20) konfiguriert ist, um auf der Welle (40) zu drehen, die die Antriebseinrichtung (50) dreht, und der Folgerotor (30) konfiguriert ist, um angetrieben über ein Gestänge (37) mit der Antriebseinrichtung (50) zu drehen.

## Revendications

1. Cycle thermodynamique à six phases pour un moteur à combustion interne rotatif (1) à double centre de rotation, le moteur (1) comprenant un carter (10) à chambres de détente et de compression circulaires sécantes (120, 110), une chambre d'admission centrale dynamique (130) et une chambre de combustion statique (140) au sommet de celle-ci ; un rotor de puissance (20) ; un rotor suiveur (30) ; un arbre de rotation (40) ; et un moyen d'entraînement (50), le cycle thermodynamique à six phases comprenant :
une phase 1 dans laquelle, dans une phase d'admission, un volume d'air entre dans la chambre d'admission centrale (130) du carter (10) par un orifice d'admission d'air périphérique (11) et se mélange aux gaz d'échappement recirculés de la phase 3 ;
une phase 2 dans laquelle, dans une première phase de compression, le volume d'air et des gaz d'échappement recirculés de la phase 1 est comprimé à un faible taux de compression par la réduction du volume de la chambre d'admission dynamique (130) à l'intérieur du carter (10) ;
une phase 3 dans laquelle, dans une phase combinée de balayage et de recirculation des gaz d'échappement, une partie du volume d'air et des gaz d'échappement recirculés de la phase 2 balaye la chambre de combustion statique (140) et balaye partiellement la chambre de détente (120), la chambre de détente dynamique (120) fusionne alors avec la chambre d'admission centrale dynamique (130) faisant recirculer les gaz d'échappement résiduels de la phase 6 à l'intérieur du carter (10) ;
une phase 4 dans laquelle, dans une deuxième phase de compression, la chambre d'admission dynamique (130) se sépare pour former une chambre de compression dynamique (110) et le volume résiduel des gaz d'échappement et d'air combinés de la phase 2 est comprimé à un taux de compression élevé dans la chambre de combustion statique à l'intérieur du carter (10);
une phase 5 dans laquelle, dans une phase de puissance, une chambre de détente dynamique (120) est formée, issue de la chambre de combustion statique (140) et un couple est produit pour faire tourner l'arbre de sortie (40) ; et
une phase 6 dans laquelle, dans une phase d'échappement, les gaz d'échappement de la phase 5 sont évacués de la chambre de détente dynamique (120) à travers un orifice d'échappement périphérique (12) dans le carter (10).

2. Cycle thermodynamique selon la revendication 1, dans lequel les phases 1, 2 et 3 du cycle thermodynamique à six phases se produisent en succession.

3. Cycle thermodynamique selon les revendications 1 ou 2, dans lequel les phases 4, 5 et 6 du cycle thermodynamique à six phases se produisent en succession.

4. Cycle thermodynamique selon l'une quelconque des revendications 1 à 3, dans lequel pendant chaque phase du cycle thermodynamique, au moins une partie d'une autre phase différente du cycle se produit également simultanément.

5. Cycle thermodynamique selon la revendication 4, dans lequel, par conséquent, les phases 1, 2 et 3 du cycle thermodynamique à six phases se produisent simultanément avec au moins une partie d'une ou plusieurs des phases 4, 5 et 6.

6. Cycle thermodynamique selon l'une quelconque des revendications 1 à 5, dans lequel la phase 1 (admission) se produit simultanément avec la majorité de la phase 4 (deuxième compression).

7. Cycle thermodynamique selon l'une quelconque des revendications 1 à 6, dans lequel la phase 2 (première compression) se produit simultanément avec la majorité de la phase 5 (puissance).

8. Cycle thermodynamique selon l'une quelconque des revendications 1 à 7, dans lequel la phase 3 (balayage et recirculation des gaz d'échappement) se produit très près de la phase 6 (gaz d'échappement).

9. Cycle thermodynamique selon l'une quelconque des revendications 1 à 8, dans lequel la phase 3 comprend une partie de l'air et des gaz d'échappement recirculés de la phase 2 passant d'un côté droit du carter (10) à un côté gauche via une chambre de combustion statique (140) au point mort haut.

10. Cycle thermodynamique selon la revendication 9, dans lequel la phase 3 comprend l'introduction d'eau pour refroidir les gaz d'échappement dans la chambre de détente (120).

11. Cycle thermodynamique selon l'une quelconque des revendications 1 à 10, dans lequel dans la phase 3 la chambre de détente dynamique (120) fusionne avec la chambre d'admission centrale dynamique (130) et les gaz d'échappement et l'air combinés sont aspirés dans la chambre d'admission centrale (130) du carter (10).

12. Cycle thermodynamique selon l'une quelconque des revendications 1 à 11, dans lequel dans la phase 4, le carburant est injecté dans la chambre de compression (110) (rotation d'environ 225 degrés) et pendant la poursuite de la compression dans la phase 4, le carburant est sensiblement vaporisé.

13. Cycle thermodynamique selon la revendication 12, dans lequel pendant la phase 4, un mélange de charge homogène est créé à partir des gaz d'échappement et de l'air combinés et du carburant vaporisé.

14. Cycle thermodynamique selon l'une quelconque des revendications 1 à 13, dans lequel dans la phase 5 (puissance), les conditions dans la chambre de combustion (140) comprennent une charge homogène et un taux de compression élevé.

15. Moteur à combustion interne rotatif (1) à double centre de rotation adapté pour exécuter le cycle thermodynamique à six phases selon l'une quelconque des revendications 1 à 14, comprenant : un carter (10) à chambres de détente et de compression circulaires sécantes (120, 110), définissant une chambre d'admission centrale dynamique (130) et une chambre de combustion statique (140) au sommet de celle-ci ; un rotor de puissance (20) ; un rotor suiveur (30) ; un arbre de rotation (40); et un moyen d'entraînement (50), **caractérisé en ce que** le rotor de puissance (20) et le rotor suiveur (30) sont agencés en relation d'emboîtement l'un avec l'autre et reposent sur des axes de rotation différents à l'intérieur d'une orbite d'expansion (A') et de l'orbite de compression (B') respectivement, dans lequel le rotor de puissance (20) est configuré pour tourner sur l'arbre (40), qui fait tourner ledit moyen d'entraînement (50) et le rotor suiveur (30) est configuré pour tourner entraîné via une transmission (37) avec ledit moyen d'entraînement (50).
